# EUROPEAN PATENT APPLICATION

(11) **EP 2 731 162 A1**
(43) Date of publication of application: **14.05.2014**
(21) Application number: 13177211.3
(22) Date of filing: 19.07.2013
(51) Int. Cl.: H01M 2/02, H01M 2/12, H01M 2/04, H01M 2/06, H01M 2/20

(54) **Lithium battery with excellent safety**

(30) Priority: 09.11.2012 KR 20120126731
(71) Applicant: Vitzrocell Co., Ltd., Seoul 143-837 (KR)
(72) Inventor: Lee, Sang-Il, 340-911 Chungcheongnam-do (KR); Lee, Dong-Choon, 314-758 Chungcheongnam-do (KR); Jung, Kwang-Il, 540-140 Jeollanam-do (KR); Kim, Bum-Soo, 331-738 Chungcheongnam-do (KR)
(74) Representative: Zacco Denmark A/S

(57) **Abstract**

Disclosed herein is a lithium battery which exhibits minimal dimensional deformation of a case thereof and easily discharges gas therefrom. The lithium battery includes an electrode assembly in which cathode and anode plates face each other with a separator therebetween; a case body receiving the electrode assembly and an electrolyte, the case body including a barrel-shaped sidewall open at a top thereof and a bottom bulging in a direction away from the electrode assembly; and a top cap disposed on the top of the case body and provided with a safety exhaust outlet through which gas is discharged upon increase in internal pressure.

## Description

### BACKGROUND

### 1. Technical Field

The present invention relates to a lithium battery, and more particularly, to a lithium battery with excellent safety, which exhibits minimal dimensional deformation of a case thereof and easily discharges gas therefrom.

### 2. Description of the Related Art

Batteries, which convert chemical energy into electrical energy, include a case, an electrode assembly including cathode and anode materials in the case, and an electrolyte, and are divided into various types depending on materials used and purposes. Recently, with the development of electronic, communication and computer industries, lithium batteries employing lithium as an anode are widely used as a power supply for driving electronic products due to merits such as high output, high capacity, low self-discharge rate, and the like.

When exposed to abnormal conditions such as overcharge, over-discharge, short circuit, forced charge, and the like, lithium batteries can suffer from problems such as leakage, burst or ignition due to heat generation and increase of internal pressure resulting from electrochemical reaction therein.

To solve these problems, various safety mechanisms have been applied to lithium batteries in the art, and a vent is a representative safety mechanism. The vent has a groove shape so that a portion of the battery case is thinner than other portions. When high temperature due to heat generation and high pressure due to increase of internal pressure are generated inside the lithium battery, the case of the lithium battery expands and the vent breaks, thereby allowing internal gas to be discharged outside.

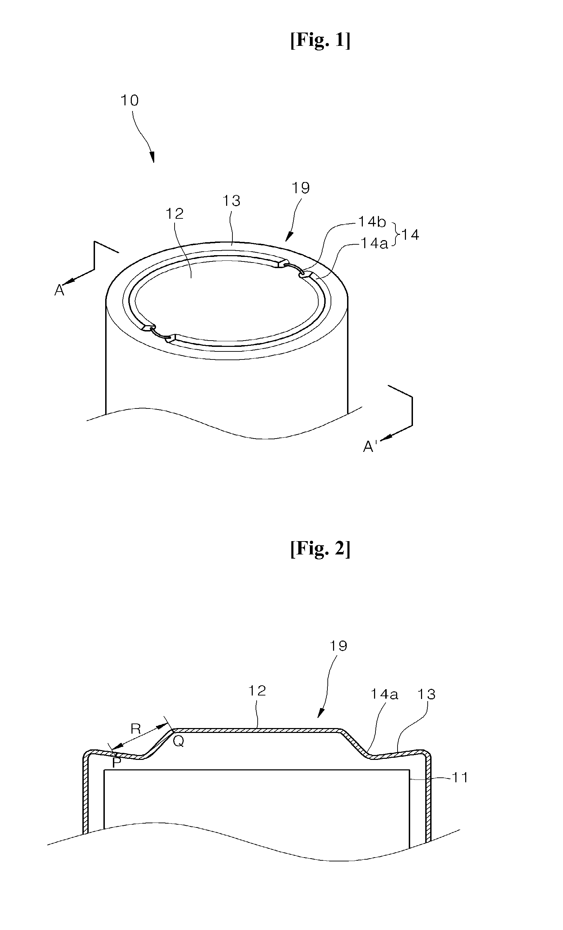

Fig. 1 is a perspective view of a bottom of a typical lithium battery, and Fig. 2 is a sectional view taken along line A-A' of Fig. 2.

Referring to Fig. 1, a case 19 of a typical lithium battery 10 has a hollow cylindrical shape. The case 19 is provided at a bottom thereof with a safety mechanism 14, which includes grooves 14a and vents 14b. Each of the grooves 14a is formed along an outer periphery 13 of the case 19 and is formed in a V shape, which has a lower height than an upper surface of the case 19. Here, two symmetrical grooves are formed with respect to the center of an inner section 12. The grooves 14a constitute a boundary between the inner section 12 and the outer periphery 13. Each of the vents 14b is straddled between ends of the grooves 14a, and has a relatively thin groove shape.

Referring to Fig. 2, an electrode assembly 11 is received in the case 19 of the lithium battery 10. Cathode and anode materials undergo redox reaction via an electrolyte and generate electricity. At this moment, when the lithium battery 10 is exposed to abnormal conditions such as overcharge, over-discharge, short circuit, forced charge, and the like, there are problems that leakage, burst or ignition occurs due to heat generation and increase of internal pressure caused by electrochemical reaction generated therein. When the internal pressure exceeds a predetermined value, a distance between a start point (P) and an end point (Q) of the grooves 14a is increased to R while the inner section 12 is uplifted.

On the contrary, strong tensile stress is applied to a groove-free portion at which the vents 14b are formed, as compared with a flat surface, so that the vents 14b break.

Although not shown, a top cap, provided with a pin coupling portion in which a pin constituting a cathode (+) terminal is coupled to a base constituting an anode (-) terminal so that the pin and the base are insulated from each other, is provided to a lower portion of the case 19 and seals the lithium battery 10.

In this way, since the safety mechanism 14 of the lithium battery 10 is provided to the bottom of the case 19, in a battery pack in which several unit lithium batteries are arranged in series-parallel connection, opening of the safety mechanism can be disturbed due to restriction of the bottom caused by assembly of the batteries, and the case can be corroded by the leaked electrolyte around the slightly opened safety mechanism, thereby causing problems such as re-blockage of the safety mechanism by oxides. Meanwhile, internal gas pressure is typically dispersed to a top header of the case 19 of the lithium battery 10, and to the bottom thereof to which the safety mechanism is provided, thereby generating a bulge phenomenon on the header and the bottom. Thus, the internal gas pressure is partially lost and deviation in pressure applied to the vents 14b occurs, thereby causing variation of an operation time of the vents 14b. In addition, the internal gas pressure is typically dispersed to the top header of the case 19 of the lithium battery 10, and to the bottom thereof to which the safety mechanism is provided, thereby generating a bulge phenomenon at the header and the bottom and thus, the lithium battery 10 exhibits significant dimensional deformation, thereby causing difficulty in design of a battery pack consisting of a plurality of lithium batteries 10.

In relation to this invention, a safety vent of lithium ion batteries is disclosed in Korean Patent Publication No. 10-2000-0020975A (published on April 15, 2000).

### BRIEF SUMMARY

It is an aspect of the present invention to provide a lithium battery which is configured to exhibit less dimensional deformation of a case thereof while allowing easy discharge of gas therefrom.

It is another aspect of the present invention to provide a lithium battery, in which a lower case of the lithium battery is processed to bulge outwards from an electrode assembly to allow an internal pressure to be concentrated at a vent of an upper case instead of causing the lower case to bulge, thereby preventing dimensional deformation of the lower case due to the internal pressure.

In accordance with one aspect of the present invention, a lithium battery includes: an electrode assembly in which cathode and anode plates face each other with a separator therebetween; a case body receiving the electrode assembly and an electrolyte, the case body including a barrel-shaped sidewall open at a top thereof and a bottom bulging in a direction away from the electrode assembly; and a top cap disposed on the top of the case body and provided with a safety exhaust outlet through which gas is discharged upon increase in internal pressure.

The sidewall may be integrally formed with the bottom.

The top cap may be formed with an insertion portion in a region including a center of the top cap.

The lithium battery may further include a terminal assembly inserted into the insertion portion and having an insulated terminal at the center thereof.

The terminal assembly may include: a base plate formed of a circular conductive plate and having a through-hole at a center thereof; a terminal inserted into the through-hole; and fused glass powder formed along an outer periphery of the through-hole and interposed between the base plate and the terminal. Here, the terminal may be formed of a conductor including a rod-shaped terminal body and a head disposed on at least one end of the terminal body.

The bottom may include a first receiving portion, which receives the head of the terminal, and a second receiving portion, which receives the base plate, and the first receiving portion and the second receiving portion receive the head and the base plate, respectively, when an adjacent lithium battery is stacked on the bottom.

The second receiving portion may further include an insulating member.

The safety exhaust outlet may be formed in a V or U shape along an inner side of the outer periphery, and may include at least one pair of grooves symmetrically formed with respect to the center of the top cap; and a vent formed between ends of the at least one pair of grooves and having a groove shape.

The top cap may be provided with a coupling portion bent and extending from the outer periphery. Here, the coupling portion may be coupled to the sidewall.

The bottom may further include a bottom cap covering the bottom. The bottom cap may include a bottom sidewall which partially contacts or is coupled to the sidewall, and a bottom receiving portion which is bent and extends from the bottom sidewall and substantially receives the bottom.

The bottom receiving portion may include a first cap receiving portion which is partially received in and coupled to the first receiving portion, and a second cap receiving portion which is partially received in and coupled to the second receiving portion.

The bottom receiving portion or the first cap receiving portion may further include a bottom coupling portion.

### BRIEF DESCRIPTION OF THE DRAWINGS

The above and other aspects, features, and advantages of the present invention will become apparent from the detailed description of the following embodiments in conjunction with the accompanying drawings, in which:
Fig. 1 is a perspective view of a bottom of a typical lithium battery;
Fig. 2 is a sectional view taken along a line A-A' of Fig. 1;
Fig. 3 is a sectional view of a lithium battery according to a first embodiment of the present invention;
Fig. 4 is an exploded sectional view of Fig. 3;
Fig. 5 is a perspective view of a top cap of Fig. 3;
Fig. 6 is a plan view of the top cap of Fig. 5;
Fig. 7 is a diagram of a manufacturing process of a terminal assembly of Fig. 3;
Fig. 8 is a perspective view of a bottom of Fig. 3;
Fig. 9 is a plan view of the bottom;
Fig. 10 is an exploded sectional view of a lithium battery according to a second embodiment of the present invention;
Fig. 11 is a perspective view of a bottom of Fig. 10; and
Fig. 12 is a perspective view of the bottom in an inverted state.

### DETAILED DESCRIPTION

Hereinafter, embodiments of the present invention will be described in detail with reference to the accompanying drawings. It should be understood that the invention is not limited to the following embodiments and may be embodied in different ways, and that the embodiments are given to provide complete disclosure of the invention and to provide thorough understanding of the invention to those skilled in the art. The scope of the invention is limited only by the accompanying claims and equivalents thereof. Like components will be denoted by like reference numerals throughout the specification.

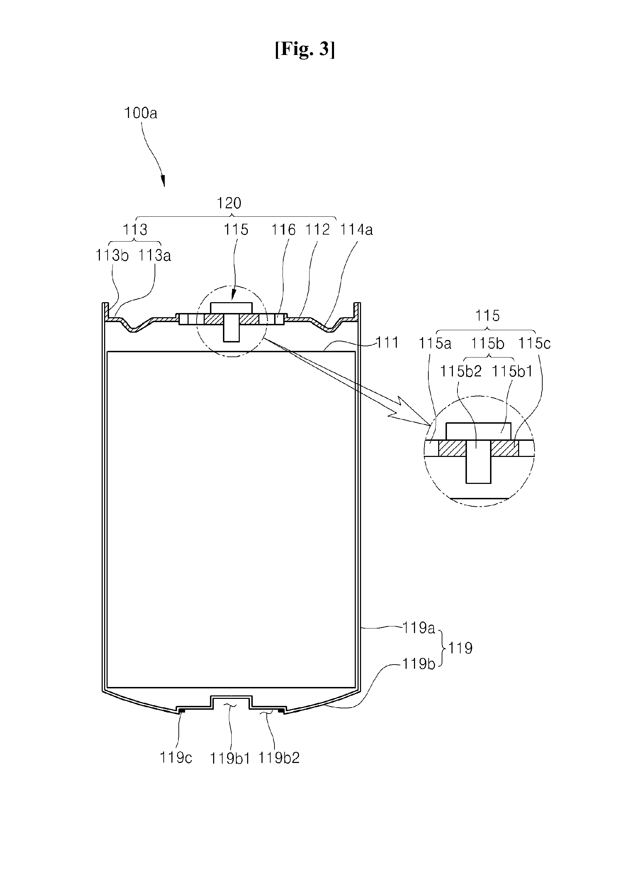

Now, referring to Figs. 3 to 9, a lithium battery according to a first embodiment of the present invention will be described in detail.

Referring to Figs. 3 to 6, a lithium battery 100a according to the first embodiment includes: an electrode assembly 111; a case body 119, which receives the electrode assembly 111 and an electrolyte, and includes a barrel-shaped sidewall 119a open at a top thereof and a bottom 119b extending from a lower side of the sidewall 119a; and a top cap 120 disposed on the top of the case body 119 and provided with a safety exhaust outlet 114.

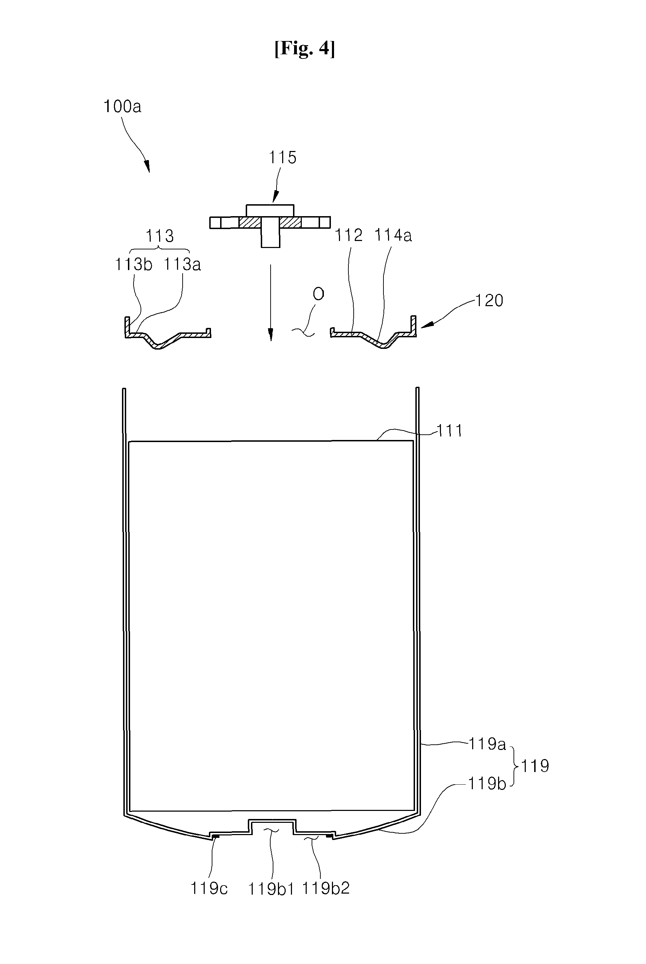

Referring to Figs. 3 and 4, the electrode assembly 111 includes cathode and anode plates coated with cathode and anode materials, respectively, which generate electricity through electrochemical reaction, and a separator placed between the cathode and anode plates facing each other.

The case body 119 includes the sidewall 119a open at the top thereof and the bottom 119b extending from the lower side of the sidewall 119a. The sidewall 119a has a hollow barrel shape and receives the electrode assembly 111 therein. Here, the bottom 119b may be formed with a first receiving portion 119b1 which receives a head 115b1 described below, and a second receiving portion 119b2 which receives a base plate 115a described below. As described above, the bottom 119b is formed with the first and second receiving portions 119b1, 119b2, thereby preventing deformation of the case body due to the internal pressure of the lithium battery 100a.

The second receiving portion 119b2 may be provided with an insulating member 119c. The insulating member 119c serves to insulate the head 115b1 and the base plate 115a, described below, from the first and second receiving portions 119b1, 119b2, which receive the head 115b1 and the base plate 115a, respectively. The head 115b1 and the base plate 115a correspond to a cathode and an anode of the battery, respectively. Thus, since the first and second receiving portions 119b1, 119b2 are short circuited when placed on a continuous metal conductor line, the first and second receiving portions 119b1, 119b2 are also insulated from each other by the insulating member 119c to prevent short circuit. According to this embodiment, when an adjacent lithium battery 100a is stacked on the bottom 119 of the lithium battery 100a, the first and second receiving portions 119b1, 119b2 may receive the head 115b1 and the base plate 115a of the adjacent lithium battery, respectively. Thus, when a battery pack is prepared using the lithium batteries 100a, design of the battery pack may become easier.

Here, the top cap 120 may be provided at an inner section 112 thereof with a terminal assembly 115. The inner section 112 includes an insertion portion 0 formed in a region including the center of the top cap 120, and the terminal assembly 115 is inserted into the insertion portion 0. Here, a coupling member 116, which corresponds to an outer diameter of the terminal assembly 115, is interposed between the terminal assembly 115 and the inner section 112, and may be welded to an innermost side of the inner section 112, at which the coupling member 116 and the inner section 112 are in contact with each other. Although the coupling member 116 and the innermost side of the inner section 112 are illustrated as being coupled by welding in this embodiment, it should be understood that the coupling member 116 and the innermost side of the inner section 112 may be coupled to each other in various ways depending on design.

In some embodiments, welding may include ultrasonic welding, tungsten inert gas (TIG) welding, laser welding, and the like, without being limited thereto. Here, ultrasonic welding refers to point welding or seam welding which is performed using vibration energy of ultrasound waves and suitable pressure. For example, it is possible to weld Fe, Al, Cu, Ni, Ti, Zr, or mixtures thereof. TIG welding is one type of inert gas arc welding. Arc welding uses arc discharge to join metals to each other. That is, TIG welding is an arc welding method using an inert gas. TIG welding is performed by covering arc with an inert gas such as helium, argon, and the like, to prevent oxidation and nitration, and is generally used to weld nonferrous metals and provides a smooth and pleasant metal surface to a welded zone. TIG welding is generally used to weld thin plates having a thickness of about 3 mm or less. Laser welding is performed using laser beams. Examples of materials for laser welding include solids, liquids, gases, and the like. Currently, ruby, which can be easily oscillated and provides high efficiency output, is most often applied to carbon dioxide lasers, and the like. Laser welding has various features, such as high energy density, capability of welding high melting point metals, significantly low welding heat input, a narrow heat-affected zone, welding in any atmosphere through transparent materials due to use of a light beam as a heat source, and the like.

The terminal assembly 115 includes a base plate 115a formed of a circular conductive plate and having a through-hole (P) at the center thereof, and a terminal 115b inserted into the through-hole (P). Here, the terminal 115b is formed of a conductor and includes a rod-shaped terminal body 115b2 and a head 115b1 disposed at one end of the terminal body 115b2. Here, fused glass powder described below is interposed between the base plate 115a and the terminal body 115b2.

The top cap 120 is mounted on the top of the case body 119 and seals the top thereof. The top cap 120 is provided with a safety exhaust outlet 114. A groove 114a of the safety exhaust outlet 114 is formed at a boundary between an outer periphery 113a of an outer section 113 and the inner section 112. A coupling portion 113b of the outer section 113 is welded or coupled to the sidewall 119a.

As described above, the case body 119 receives the cathode and anode plates respectively coated with the cathode and anode materials, the separator, and the electrolyte. The cathode and anode materials coated on the cathode and anode plates generate electricity through electrochemical reaction via the electrolyte. Then, when the lithium battery 100a is exposed to abnormal environments such as overcharge, over-discharge, short circuit, forced charge, and the like, there can be problems of leakage, burst or ignition due to heat generation and increase in internal pressure caused by the electrochemical reaction.

To solve these problems, various safety mechanisms such as a vent are applied to conventional lithium batteries. Generally, a safety exhaust outlet 14 including a typical vent 14b is formed on the bottom of the case 10 of the lithium battery 10 (see Figs 1 and 2).

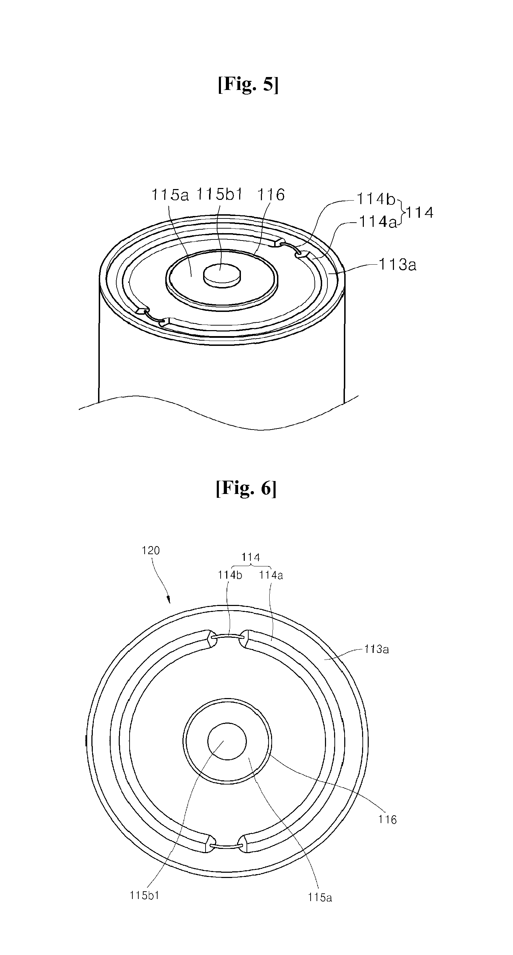

On the contrary, as shown in Figs. 5 and 6, the safety exhaust outlet 114 including a vent 114b according to the first embodiment is formed on the top cap 120 of the lithium battery 100a, and is placed at the boundary between the inner section 112 and the outer periphery 113a of the top cap 120.

The safety exhaust outlet 114 is formed along an inner side of the outer periphery 113a and is formed in a V shape, which has a lower height than an upper surface of the top vent. The safety exhaust outlet 114 includes two grooves 114a symmetrically formed with respect to the center of the top cap 120; and the vent 114b placed between ends of the grooves 114a. Here, the vent 114b has a relatively thin groove shape. The top cap 120 includes the coupling portion 113b bent and extending from the outer periphery 113a to be coupled to the sidewall 119a by welding. In this embodiment, the number of grooves 114a is two. However, it should be understood that the present invention is not limited thereto, and the number of grooves may differ depending on design. The grooves 114a may be formed in various shapes, for example, a concave shape such as a U shape, without being limited to a V shape. In addition, although the coupling portion 113b is illustrated as being coupled to the sidewall 119a by welding in this embodiment, it should be understood that the coupling portion 113b may be coupled to the sidewall 119a in various ways depending on design.

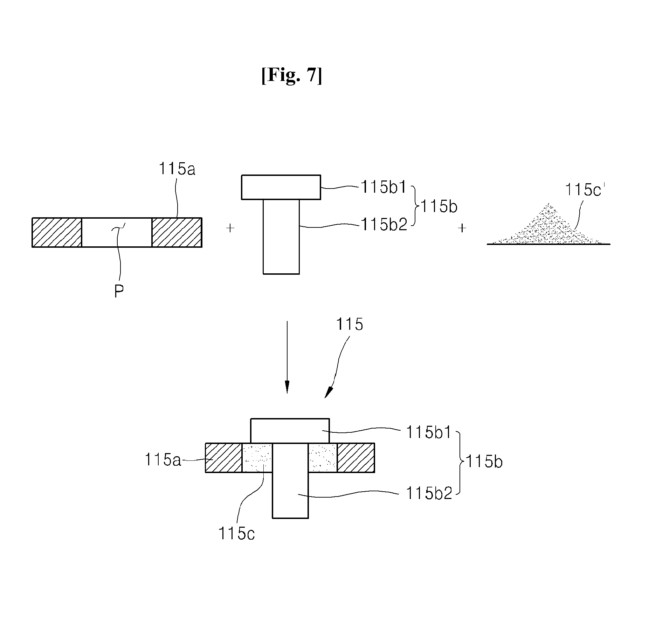

Now, referring to Fig. 7, a method for preparing the terminal assembly 115 will be described.

First, a base plate 115a, a terminal 115b and glass powder 115c' are prepared. The base plate 115a may employ a circular conductive plate and may be formed with a through-hole (P) at the center thereof. The terminal 115b includes a rod-shaped terminal body 115b2 and a head 115b1 disposed at one end of the terminal body 115b2. Here, the terminal body 115b2 and the head 115b1 are formed of a conductor.

Next, the terminal 115b is disposed at the center of the through-hole (P) of the base plate 115a, and the through-hole (P) is filled with the glass powder 115c'. Then, the glass powder 115c' filling the through-hole (P) is melted by heat treatment at a melting point thereof or higher. Finally, the melted glass powder 115c' is cooled. Then, the fused glass powder 115c is interposed between the terminal 115b and the base plate 115a, thereby completing the terminal assembly 115. Here, the terminal 115b forming a cathode (+) terminal is insulated from the base plate 115a forming an anode (-) terminal by the fused glass powder 115c.

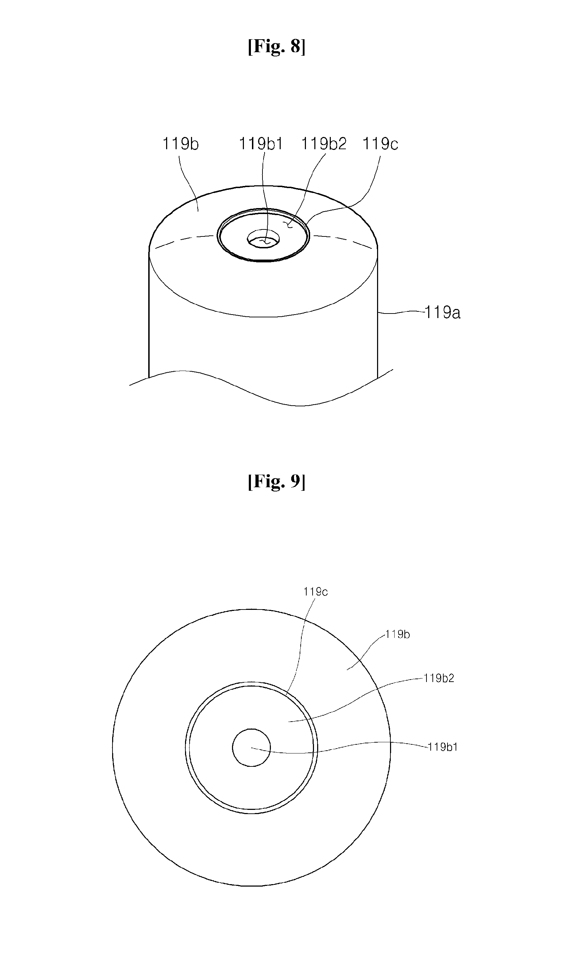

Referring to Figs. 8 and 9, according to the first embodiment, the bottom 119b of the case body 119 is mounted on the lower side of the sidewall 119a and is formed to bulge outwards from the electrode assembly 111. Here, the bottom 119b may be bent and extend from the sidewall 119a. That is, the bottom 119b may be integrally formed with the sidewall 119a. Here, although the bottom 119b and the sidewall 119a are illustrated as being integrally formed with each other in this embodiment, it should be understood that the present invention is not limited thereto and the bottom 119b and the sidewall 119a may be separately formed and coupled to each other by welding and the like.

In a typical lithium battery, since a safety mechanism is provided to a bottom of a case of the battery, in a pack battery in which several unit lithium batteries are arranged in a series-parallel connection structure, opening of the safety mechanism can be disturbed due to restriction of the bottom caused by assembly of the batteries, and the case can be corroded by the leaked electrolyte around the slightly opened safety mechanism, thereby causing problems such as re-blockage of the safety mechanism by oxides. However, according to the first embodiment of the invention, unlike the typical lithium battery, since the safety exhaust outlet 114 is disposed on the top cap 120, opening of the safety exhaust outlet 114 is not disturbed due to restriction of the bottom 119b, and gas inside the lithium battery 100a can be easily discharged since problems such as re-blockage do not occur.

In the typical lithium battery, internal gas pressure is typically dispersed to the top header of the case, and to the bottom to which the safety mechanism is provided, thereby generating a bulge phenomenon on the header and the bottom. Thus, the internal gas pressure is partially lost and deviation in pressure applied to the vent occurs, thereby causing variation of an operation time of the vent. In addition, the internal gas pressure is typically dispersed to the top header of the case of the lithium battery, and to the bottom thereof to which the safety mechanism is provided, thereby generating a bulge phenomenon at the header and the bottom, and thus the lithium battery exhibits large dimensional deformation, causing difficulty in design of a battery pack consisting of a plurality of lithium batteries.

However, according to the first embodiment, the bottom 119b is formed to bulge outwards from the electrode assembly 111 to allow an internal pressure of the lithium battery 100a to be concentrated at the safety exhaust outlet 114 of the top cap 120 instead of causing the bottom 119b to bulge. As such, since the internal pressure of the lithium battery 100a may be prevented from being partially lost, variation of an operation time of the vent 114b may be prevented by reducing deviation in pressure applied to the vent 114b, and dimensional deformation of the bottom 119b due to the internal pressure of the lithium battery 100a may also be prevented.

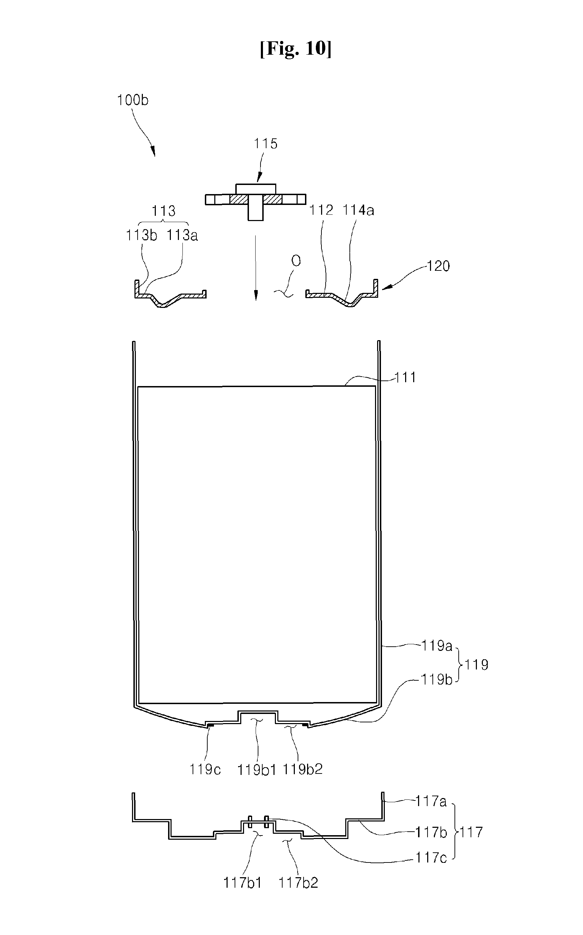

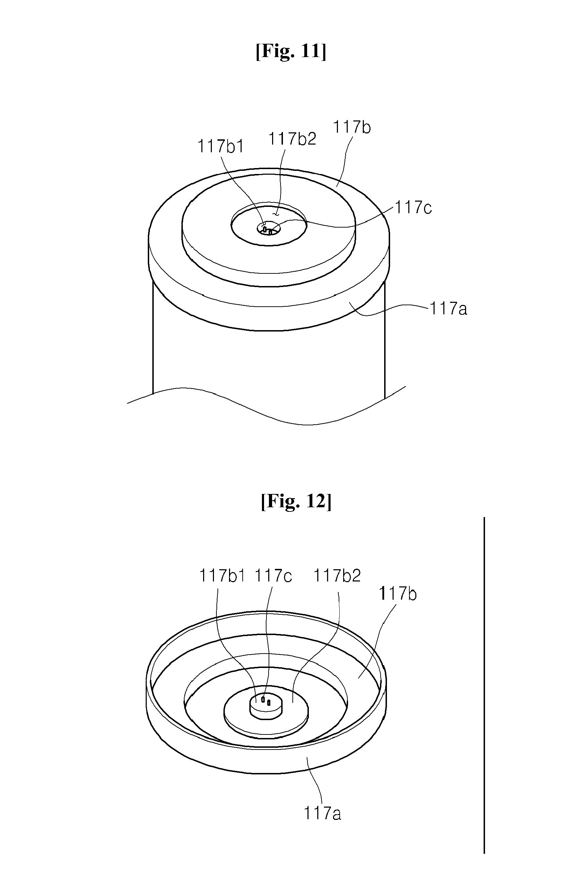

Now, with reference to Figs. 10 to 12, a lithium battery according to a second embodiment of the invention will be described in detail. Differences of the second embodiment from the first embodiment will be focused upon below.

Referring to Fig. 10, a lithium battery 100b according to the second embodiment includes: an electrode assembly 111; a case body 119, which receives the electrode assembly 111 and an electrolyte, and includes barrel-shaped sidewall 119a open at a top thereof, a bottom 119b extending from a lower side of the sidewall 119a, and a bottom cap 117 covering the bottom 119b; and a top cap 120 disposed on the top of the case body 119 and provided with a safety exhaust outlet 114.

According to the second embodiment, the bottom 119b of the case body 119 is mounted on the lower side of the sidewall 119a and is formed to bulge outwards from the electrode assembly 111. Here, the bottom 119b may be bent and extend from the sidewall 119a. That is, the bottom 119b may be integrally formed with the sidewall 119a. Although the bottom 119b and the sidewall 119a are illustrated as being integrally formed with each other in this embodiment, it should be understood that the present invention is not limited thereto and the bottom 119b and the sidewall 119a may be separately formed and coupled to each other by welding and the like.

The sidewall 119a has a hollow barrel shape and receives the electrode assembly 111 therein. Here, the bottom 119b may include a first receiving portion 119b1 which receives a head 115b1, and a second receiving portion 119b2 which receives a base plate 115a. The second receiving portion 119b2 may be provided with an insulating member 119c.

Here, the insulating member 119c serves to insulate the head 115b1 and the base plate 115a from the first and second receiving portions 119b1, 119b2, which receive the head 115b1 and the base plate 115a, respectively.

The head 115b1 and the base plate 115a correspond to a cathode (+) and an anode (-) of the battery, respectively. Thus, since the first and second receiving portions 119b1, 119b2 are short-circuited when placed on a continuous metal conductor line, the first and second receiving portions are insulated from each other by the insulating member 119c to prevent short circuit.

Referring to Figs. 10 to 12, unlike the first embodiment, the bottom cap 117 covering the bottom 119b may be provided to a lower side of the bottom 119b of the lithium battery 100b according to the second embodiment. The bottom cap 117 includes: a bottom sidewall 117a which partially contacts or is coupled to the sidewall 119a of the case body 119; and a bottom receiving portion 117b which is bent and extends from the bottom sidewall 117a and substantially receives the bottom 119b. The bottom receiving portion 117b may include a first cap receiving portion 117b1, which is partially received in and coupled to the first receiving portion 119b1, and a second cap receiving portion 117b2, which is partially received in and coupled to the second receiving portion 119b2. Particularly, a bottom coupling portion 117c may be provided to the bottom receiving portion 117b.

The bottom cap 117 may prevent the case body 119, in which the bottom 119b is formed to bulge from the lower side thereof, from falling over. The bottom coupling portion 117c may be coupled to the first receiving portion 119b1 of the bottom 119b. Here, the bottom coupling portion 117c may be a protrusion formed of a weldable metal, and may be melted and welded to the first receiving portion 119b1 of the case body 119 upon welding. The bottom coupling portion 117c may be provided to the first cap receiving portion 117b1. Thus, when the lithium battery 110b is stacked on the bottom 119 of an adjacent lithium battery 110b, the head 115b1 may be welded to and received in the first receiving portion 119b1, and the base plate 115a may be received in the second receiving portion 119b2. Accordingly, when a battery pack is prepared using the lithium batteries 100b, design of the battery pack may become easier.

In a typical lithium battery, since a safety mechanism is provided to a bottom of a case of the battery, in a battery pack in which several unit lithium batteries are arranged in a series-parallel connection structure, opening of the safety mechanism can be disturbed due to restriction of the bottom caused by assembly of the batteries, and the case can be corroded by the leaked electrolyte around the slightly opened safety mechanism, thereby causing problems such as re-blockage of the safety mechanism by oxides. However, according to the second embodiment, unlike the typical lithium battery, since the safety exhaust outlet 114 is disposed on the top cap 120, opening of the safety exhaust outlet 114 is not disturbed due to restriction of the bottom 119b, and gas inside the lithium battery 100b can be easily discharged since problems such as re-blockage do not occur.

In the typical lithium battery, internal gas pressure is typically dispersed to the top header of the case, and to the bottom to which the safety mechanism is provided, thereby generating a bulge phenomenon on the header and the bottom. Thus, the internal gas pressure is partially reduced and deviation in pressure applied to the vent occurs, thereby causing variation of an operation time of the vent. In addition, the internal gas pressure is typically dispersed to the top header of the case of the lithium battery, and to the bottom thereof to which the safety mechanism is provided, thereby generating a bulge phenomenon on the header and the bottom, and thus, the lithium battery exhibits large dimensional deformation, thereby causing difficulty in design of a battery pack consisting of a plurality of lithium batteries.

However, according to the second embodiment, the bottom 119b is formed to bulge outwards from the electrode assembly 111 to allow an internal pressure of the lithium battery 100b to be concentrated at the safety exhaust outlet 114 of the top cap 120 instead of causing the bottom 119b to bulge. Thus, the internal pressure of the lithium battery 100b is prevented from being partially lost, so that the problem of variation in an operating time of the vent 114b can be solved by reducing the deviation in pressure applied to the vent 114b, and dimensional deformation of the bottom 119b due to the internal pressure of the lithium battery 100b can be prevented.

As such, according to the embodiments of the invention, the case of the lithium battery is configured to suppress dimensional deformation, thereby enabling easy design of a battery pack.

In addition, the case of the lithium battery is provided at the top thereof with the safety exhaust outlet, thereby allowing gas to be easily discharged therefrom.

Furthermore, the case of the lithium battery allows an internal gas pressure to be concentrated on the safety mechanism, instead of being dispersed to the case and the safety mechanism upon discharge of gas, thereby reducing variation in an operating time of the vent.

Although some exemplary embodiments have been described herein, it should be understood by those skilled in the art that various modifications, variations and alterations can be made without departing from the spirit and scope of the invention. The scope of the present invention should be defined by the appended claims and equivalents thereof.

## Claims

1. A lithium battery comprising:
an electrode assembly in which cathode and anode plates face each other with a separator therebetween;
a case body receiving the electrode assembly and an electrolyte, the case body including a barrel-shaped sidewall open at the top thereof and a bottom bulging in a direction away from the electrode assembly; and
a top cap disposed on the top of the case body and provided with a safety exhaust outlet through which gas is discharged upon increase in internal pressure.

2. The lithium battery according to claim 1, wherein the sidewall is integrally formed with the bottom.

3. The lithium battery according to claim 1, wherein the top cap is formed with an insertion portion in a region including a center of the top cap.

4. The lithium battery according to claim 3, further comprising: a terminal assembly inserted into the insertion portion and having an insulated terminal at the center thereof.

5. The lithium battery according to claim 4, wherein the terminal assembly comprises:
a base plate formed of a circular conductive plate and having a through-hole at a center thereof;
a terminal inserted into the through-hole; and
fused glass powder formed along an outer periphery of the through-hole and interposed between the base plate and the terminal.

6. The lithium battery according to claim 5, wherein the terminal is formed of a conductor comprising a rod-shaped terminal body and a head disposed on at least one end of the terminal body.

7. The lithium battery according to claim 6, wherein the bottom comprises a first receiving portion which receives the head of the terminal, and a second receiving portion which receives the base plate, the first receiving portion and the second receiving portion receiving the head and the base plate, respectively, when an adjacent lithium battery is stacked on the bottom.

8. The lithium battery according to claim 7, wherein the second receiving portion further comprises an insulating member.

9. The lithium battery according to claim 1, wherein the safety exhaust outlet is formed in a V or U shape along an inner side of the outer periphery, and comprises at least one pair of grooves symmetrically formed with respect to the center of the top cap; and a vent formed between ends of the at least one pair of grooves and having a groove shape.

10. The lithium battery according to claim 9, wherein the vent is formed in a groove shape.

11. The lithium battery according to claim 10, wherein the top cap comprises a coupling portion bent and extending from the outer periphery, the coupling portion being coupled to the sidewall.

12. The lithium battery according to claim 7, wherein the bottom further comprises a bottom cap covering the bottom.

13. The lithium battery according to claim 12, wherein the bottom cap comprises a bottom sidewall which partially contacts or is coupled to the sidewall, and a bottom receiving portion which is bent and extends from the bottom sidewall and substantially receives the bottom.

14. The lithium battery according to claim 13, wherein the bottom receiving portion comprises: a first cap receiving portion which is partially received in and coupled to the first receiving portion; and a second cap receiving portion which is partially received in and coupled to the second receiving portion.

15. The lithium battery according to claim 14, wherein the bottom receiving portion or the first cap receiving portion further comprises a bottom coupling portion.
